# FASCICULE DE BREVET EUROPEEN

(11) **EP 0 438 934 B1**
(45) Date de publication et mention de la délivrance du brevet: **13.09.1995**
(21) Numéro de dépôt: 90403390.9
(22) Date de dépôt: 29.11.1990
(51) Int. Cl.: H04N 7/20

(54) **Système de distribution de signaux à très haute fréquence**
Verteilungssystem für Signale sehr hoher Frequenz
Distribution system for very high frequency signals

(30) Priorité: 04.12.1989 FR 8915969
(43) Date de publication de la demande: 31.07.1991
(73) Titulaire: EBIM S.A., F-04100 Manosque (FR)
(72) Inventeur: Giusti,Max, F-04100 Manosque (FR); Kerger, Laurent Henri, F-04100 Manosque (FR)
(74) Mandataire: Rochet, Michel

(56) Documents cités:
- EP-A- 0 282 347
- NTZ NACHRICHTECHNISCHE ZEITSCHRIFT. vol. 40, no. 9, septembre 1987, BERLIN DE pages 646 - 652; Wolf-Ulrich Knoben: "Die Satelliten DFS und TV-Sat:Gesamtsystemdarstellung und besondere Nutzungsaspekte"

## Description

L'invention a pour objet un système de distribution de signaux à très haute fréquence, et en particulier de signaux audio-visuels en provenance des satellites.

D'une manière générale, les signaux émis par les satellites sous très haute fréquence, par exemple entre 10 et 15 GHz, sont captés par une antenne par exemple parabolique, convertis en signaux de plus basse fréquence (de l'ordre de 1 à 2 GHz) puis acheminés, habituellement par câble vers un système de distribution, dans le cas d'une distribution collective (*voir Nachrichtentechnische Zeitschrift - Vol. 40, 1987, pp. 646-52*).

Le système de distribution comprend essentiellement un groupe de sous-ensembles récepteur-modulateur correspondant aux différents canaux de télévision, les divers signaux radio fréquence émis par les modulateurs conformément aux normes en vigueur (par exemple AM audio et vidéo, ou AM vidéo/FM audio) étant envoyés vers les récepteurs de télévision en U.H.F. ou V.H.F. au moyen d'un câble coaxial, par l'intermédiaire d'un coupleur.

Le plus souvent, chaque sous-ensemble est calé en usine sur la fréquence à recevoir. Les éléments actifs permettant de positionner la fréquence de chaque sous-ensemble peuvent être des synthétiseurs de fréquence qui reçoivent des ordres d'une unité centrale, ordres transformés en consignes pour positionner les oscillateurs locaux. Ces synthétiseurs peuvent eux-mêmes être constitués par une boucle à verrouillage de phase (phase locked loop ou P.L.L.).

Selon une technique habituellement utilisée, les signaux audio et vidéo reçus par le modulateur modulent une fréquence intermédiaire, de l'ordre de 30 MHz, les signaux fréquence intermédiaire sont filtrés aux fins de réduire la largeur de bande pour les signaux émis en modulation d'amplitude, translatés (multiplication fréquentielle), puis amplifiés et enfin filtrés sur la fréquence du canal choisi, c'est-à-dire entre 470 et 860 MHz avec une largeur de bande n'excédant pas 8 MHz. Autrement dit, dans ces systèmes, on effectue à partir de la fréquence intermédiaire une multiplication fréquentielle jusqu'à la valeur de la fréquence du canal choisi. Un des problèmes majeurs de ces systèmes réside dans le filtrage des signaux résultant de cette multiplication fréquentielle exactement à la valeur choisie, par exemple 500 MHz, à la fois par le fait que les signaux à 500 MHz sont accompagnés de signaux parasites à faible différence de fréquence, par exemple entre 470 et 530 MHz, et par le fait qu'il est nécessaire de placer un filtre par canal (ou fréquence).

L'invention propose donc un système de distribution de signaux émis à très haute fréquence, et notamment de signaux audio et vidéo en provenance des satellites, ce système permettant à la fois d'obtenir exactement la fréquence désirée (F) sans signaux parasites à faible différence de fréquence et d'obtenir une pluralité de fréquences sans faire appel à un filtre par canal ou fréquence.

Ce système de distribution de signaux émis à très haute fréquence, qui comprend une antenne réceptrice, un récepteur, un modulateur et des moyens adaptés pour assurer la liaison entre l'antenne et le récepteur et pour relier la sortie du système à un dispositif de sortie (13), les signaux reçus par le modulateur étant délivrés en fréquence intermédiaire FI, les signaux modulés ainsi reçus étant translatés, amplifiés, filtrés sur la fréquence choisie F et envoyés vers le dispositif de sortie, est caractérisé en ce que le modulateur comprend :
- un premier oscillateur local (6),
- un premier convertisseur de fréquence (5) recevant le signal fourni par ledit premier oscillateur local et destiné à translater les signaux modulés reçus en fréquence intermédiaire FI à une fréquence fixe F₁ se situant au-dessus de la bande de fréquence F du canal de sortie du système, la fréquence FI étant inférieure à la fréquence fixe F₁ ;
- un premier filtre (7) pour recevoir le signal de sortie du premier convertisseur et éliminer la fréquence du premier oscillateur local (6) et les fréquences inférieures à la fréquence fixe F₁, contenues dans ledit signal de sortie du premier convertisseur ;
- un deuxième convertisseur de fréquence (8₁) recevant la sortie du premier filtre (7) à la fréquence F₁, associé à un second oscillateur local (9) commandé par un synthétiseur (10) pour la translater d'une fréquence F₂ , F₂ étant la fréquence du signal de sortie dudit second oscillateur local, égale à F₁ + F ;
- un deuxième filtre (11) recevant le signal de sortie du deuxième convertisseur pour ne transmettre que la fréquence F envoyée vers le dispositif de sortie (13).

Pour simplifier, l'ensemble des dispositifs compris entre le modulateur (inclus) et le filtre final sera appelé "modulateur".

A la différence du système décrit précédemment, la première conversion à une fréquence supérieure à la fréquence voulue pour les signaux de sortie, permet d'élargir au maximum les bandes de fréquence des signaux en vue d'en faciliter le filtrage. En effet, ainsi qu'il a été rappelé, une translation de 30 MHz à 500 MHz conduit à la présence de signaux à 470 et de signaux à 530 MHz (en plus de signaux à 500 MHz) et le filtrage de la bonne fréquence est délicat. De plus, il convient de disposer d'un filtre pour chaque fréquence désirée. L'utilisation d'une fréquence supérieure à la fréquence désirée d'au moins 100 MHz de préférence, par exemple d'une fréquence de 1 GHz pour la même fréquence voulue de 500 MHz conduit à des signaux à 500, 1500 et 2500 MHz, dont la séparation par filtrage est considérablement plus aisée.

De plus, après le filtrage éliminant les fréquences inférieures à la fréquence fixe (F₁) choisie (1 GHz dans cet exemple), l'utilisation d'un synthétiseur commandé par une unité centrale, laquelle peut être reliée et commandée par un simple clavier, permet de sélectionner directement la fréquence de sortie, la fréquence F₁ étant elle-même éliminée par le filtre passe-bande.

Autrement dit, ce système permet non seulement de parvenir facilement à la fréquence voulue, par exemple par simple commande du 2ème convertisseur au moyen d'un clavier numérique, mais encore de pouvoir commander à volonté la fréquence voulue sans être tenu d'intercaler dans le circuit les filtres correspondant à chacune desdites fréquences voulues. De ce fait, et à la différence des systèmes traditionnels, le réglage du système de distribution, c'est-à-dire le choix des différentes fréquences de sortie (correspondant aux différents canaux de télévision par exemple) peut être fait non plus par le fabricant, c'est-à-dire en usine, mais directement sur le site d'exploitation.

Dans le système décrit ci-avant, il est fait appel à des synthétiseurs, filtres, amplificateurs, récepteurs, modulateurs, convertisseurs de fréquence, oscillateurs locaux qui sont individuellement connus et ne constituent pas, séparément, des objets de l'invention.

L'invention réside en fait dans cette combinaison de dispositifs et plus précisément dans l'utilisation de convertisseurs dans les conditions rappelées précédemment.

A titre purement illustratif, la planche montre un schéma d'installation de ces différents éléments.

Sur cette planche, les symboles et repères ont les significations suivantes :
1. Accès vidéofréquence
2. Accès audiofréquence
3. Modulateur en fréquence intermédiaire
4. Filtre 1ère fréquence intermédiaire
5. 1er convertisseur de fréquence
6. Oscillateur associé au 1er convertisseur de fréquence
7. Filtre 2ème fréquence intermédiaire
8. 2ème convertisseur de fréquence
9. Oscillateur associé au 2ème convertisseur de fréquence
10. Synthétiseur de fréquence
11. Filtre de sortie
12. Amplificateur
13. Récepteur finale (par exemple téléviseur)
14. Unité centrale
15. Clavier de programmation

Les indications données précédemment concernent le "modulateur" (au sens donné plus haut). Cela signifie que, de part et d'autre de ce "modulateur", le système de distribution peut comprendre du matériel traditionnel. En d'autres termes, en amont du modulateur, on peut utiliser une antenne réceptrice classique, en particulier une antenne parabolique, un convertisseur lui-même conventionnel de même qu'un récepteur classique. De même, au-delà du "modulateur", les signaux peuvent être envoyés sur un coupleur traditionnel avant d'être acheminés vers le récepteur final, le cas échéant conjointement aux signaux captés par les antennes classiques.

On peut cependant, et ceci constitue une variante du système de distribution conforme à l'invention, associer au "modulateur" un récepteur également "agile", c'est-à-dire comprenant des synthétiseurs de fréquence constitués d'une boucle à verrouillage de phase (P.L.L.) et recevant leurs ordres d'une unité centrale. Dans un tel système, les signaux provenant à l'antenne (parabolique) sous très haute fréquence (par exemple de 10 à 15 GHz) passent dans un convertisseur de fréquence, un amplificateur puis sont translatés en fréquence intermédiaire positionnée par le synthétiseur commandé par l'unité centrale à la fréquence voulue puis sont filtrés et démodulés afin d'extraire les signaux vidéo et signaux audio. Ainsi qu'il a été précisé, le "modulateur" conforme à l'invention offre un moyen de générer des signaux à une fréquence voulue (fréquence de sortie) à la fois d'une manière très efficace quant à l'élimination des signaux parasites et simple, aussi bien du fait de la suppression des filtres correspondant à chacune des fréquences de sortie que du fait de la possibilité offerte de régler lesdites fréquences directement sur le site d'exploitation alors que les systèmes traditionnels impliquent un préréglage en usine, fréquence par fréquence et nécessitent, en cas de panne, la détention de modulateurs pré-réglés correspondant au modulateur défaillant.

Autrement dit, dans un système de distribution de plusieurs dizaines de canaux, le nouveau "modulateur" permet de remplacer n'importe lequel des modulateurs défaillants, sans qu'il soit nécessaire de maintenir autant de modulateurs de rechange qu'il y a de modulateurs en service.

Dans l'éventualité où "le modulateur" agile est associé à un récepteur agile, tel que décrit précédemment, on constate qu'un même modèle de couple récepteur/modulateur permet, par simple commande par exemple au moyen d'un clavier de distribuer toutes les fréquences correspondant aux dizaines de canaux mentionnés plus haut.
Le "modulateur" (et le récepteur) ont été décrits ci-avant plus précisément dans l'application aux signaux de télévision émis par satellite. Il va sans dire que le système en lui-même peut recevoir et distribuer d'autres types de signaux, tels que par exemple des informations numériques et l'invention s'étend bien entendu à toutes autres applications de ce système.

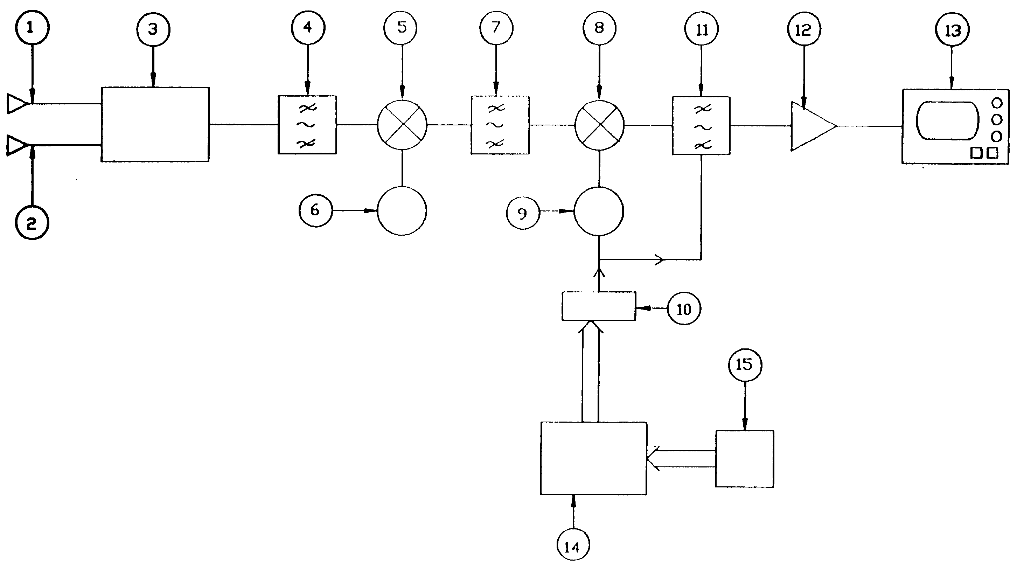

## Revendications

1. Système de distribution de signaux émis à très haute fréquence, comprenant une antenne réceptrice, un récepteur, un modulateur et des moyens adaptés pour assurer la liaison entre l'antenne et le récepteur et pour relier la sortie du système à un dispositif de sortie (13), les signaux reçus par le modulateur étant délivrés en fréquence intermédiaire (FI), les signaux modulés ainsi reçus étant translatés, amplifiés, filtrés, sur la fréquence choisie F et envoyés vers le dispositif de sortie, caractérisé en ce que le modulateur comprend :
- un premier oscillateur local (6),
- un premier convertisseur de fréquence (5) recevant le signal fourni par ledit premier oscillateur et destiné à translater les signaux modulés reçus en fréquence intermédiaire FI à une fréquence fixe F₁ se situant au-dessus de la bande de fréquence F du canal de sortie du système, la fréquence FI étant inférieure à la fréquence fixe F₁ ;
- un premier filtre (7) pour recevoir le signal de sortie du premier convertisseur et éliminer la fréquence du premier oscillateur local (6) et les fréquences inférieures à la fréquence fixe F₁, contenues dans ledit signal de sortie du premier convertisseur ;
- un deuxième convertisseur de fréquence (8) recevant la sortie du premier filtre (7) à la fréquence F₁, associé à un second oscillateur local (9) commandé par un synthétiseur (10) pour la translater d'une fréquence F₂ , F₂ étant la fréquence du signal de sortie dudit second oscillateur local, égale à F₁ + F ;
- un deuxième filtre (11) recevant le signal de sortie du deuxième convertisseur pour ne transmettre que la fréquence F envoyée vers le dispositif de sortie (13).

2. Système selon la revendication 1, caractérisé en ce que la fréquence fixe F₁ est supérieure d'au moins 100 MHz à la fréquence de sortie maximum désirée.

3. Système selon l'une quelconque des revendications 1 ou 2, caractérisé en ce que le récepteur comprend des synthétiseurs de fréquence constitués d'une boucle à verrouillage de phase (P.L.L.), commandés par une unité centrale.

4. Système selon l'une quelconque des revendications 1 à 3, caractérisé en ce que la fréquence de sortie du modulateur et éventuellement du récepteur est commandée par un clavier numérique.

5. Utilisation d'un système selon l'une quelconque des revendications 1 à 4 pour la distribution de signaux audio et vidéo en provenance d'un satellite.

## Claims

1. System for distributing signals sent out at very high frequency, comprising a receiving antenna, a receiver, a modulator and means configured to provide the link between the antenna and the receiver and to link the output of the system to an output device (13), the signals received by the modulator being delivered at intermediate frequency (IF), the modulated signals thus received being transposed, amplified, filtered, on the chosen frequency F and sent to the output device, characterized in that the modulator comprises:
- a first local oscillator (6),
- a first frequency converter (5) receiving the signal supplied by the said first oscillator and intended to transpose the modulated signals received at intermediate frequency IF to a fixed frequency F₁ lying beyond the frequency band F of the output channel of the system, the IF frequency being lower than the fixed frequency F₁;
- a first filter (7) for receiving the output signal from the first converter and eliminating the frequency of the first local oscillator (6) and the frequencies lower than the fixed frequency F₁, which are contained in the said output signal of the first converter;
- a second frequency converter (8) receiving the output of the first filter (7) at the frequency F₁, associated with a second local oscillator (9) controlled by a synthesizer (10) in order to transpose it by a frequency F₂, F₂ being the frequency of the output signal of the said second local oscillator, equal to F₁ + F;
- a second filter (11) receiving the output signal of the second converter in order to transmit only the frequency F sent to the output device (13).

2. System according to Claim 1, characterized in that the fixed frequency F₁ is higher than the maximum desired output frequency by at least 100 MHz.

3. System according to either of Claims 1 and 2, characterized in that the receiver comprises frequency synthesizers consisting of a phase-locked loop (P.L.L.), which are controlled by a central unit.

4. System according to any one of Claims 1 to 3, characterized in that the output frequency of the modulator and possibly of the receiver is controlled by a numerical keyboard.

5. Use of a system according to any one of Claims 1 to 4 for distributing audio and video signals originating from a satellite.

## Patentansprüche

1. Sendesystem für Signale, die mit sehr hoher Frequenz ausgestrahlt werden, umfassend eine Empfangsantenne, einen Empfänger, einen Modulator und geeignete Vorrichtungen zur Verbindung der Antenne mit dem Empfänger und des Systemausgangs mit einer Ausgangsvorrichtung (13), wobei die von dem Modulator empfangenen Signale mit Zwischenfrequenz (FI) ausgestrahlt und die so empfangenen modulierten Signale mit der gewählten Frequenz F übertragen, verstärkt, gefiltert und zur Ausgangsvorrichtung geleitet werden, dadurch gekennzeichnet, daß der Modulator umfaßt:
- einen ersten Lokaloszillator (6),
- einen ersten Frequenzumformer (5), der das von dem ersten Lokaloszillator gelieferte Signal empfängt und die in Zwischenfrequenz FI emfangenen modulierten Signale mit einer festen Freqenz F₁ übertragen soll, die über dem Frequenzbereich F des Ausgangskanals des Systems liegt, wobei die Frequenz FI niedriger ist als die feste Frequenz F₁;
- einen ersten Filter (7) zum Empfang des Ausgangssignals des ersten Umformers und Ausschalten der Frequenz des ersten Lokaloszillators (6) und der in dem Ausgangssignal des ersten Umformers enthaltenen Frequenzen, die unter der festen Frequenz F₁ liegen;
- einen zweiten Frequenzumformer (8), der den Ausgang des ersten Filters (7) mit der Frequenz F₁ empfängt und mit einem zweiten Lokaloszillator (9) verbunden ist, der von einem Aufbereitungsteil (10) gesteuert wird, um ihn von einer Frequenz F₂ zu übertragen, wobei F₂ die Frequenz des Ausgangssignals des zweiten Lokaloszillators ist, die gleich F₁ + F ist;
- einen zweiten Filter (11), der das Ausgangssignal des zweiten Umformers empfängt und nur die zur Ausgangsvorrichtung (13) gesendete Frequenz F überträgt.

2. System nach Anspruch 1, dadurch gekennzeichnet, daß die feste Frequenz F₁ um mindestens 100 MHz höher liegt als die maximal gewünschte Ausgangsfrequenz.

3. System nach einen der Ansprüche 1 oder 2, dadurch gekennzeichnet, daß der Empfänger Frequenzaufbereitungsteile aufweist, die aus einer Phasenverriegelungsschleife (P.L.L.) bestehen und über eine Zentraleinheit gesteuert werden.

4. System nach einem der Ansprüche 1 bis 3, dadurch gekennzeichnet, daß die Ausgangsfrequenz des Modulators und eventuell des Empfängers mit einer digitalen Tastatur gesteuert wird.

5. Verwendung eines Systems nach einen der Ansprüche 1 bis 4 zum Senden von von einem Satelliten kommenden Audio- und Videosignalen.
